# EUROPEAN PATENT APPLICATION

(11) **EP 2 192 360 A1**
(43) Date of publication of application: **02.06.2010**
(21) Application number: 08773019.8
(22) Date of filing: 04.07.2008
(51) Int. Cl.: F24J 2/18, F24J 2/12, G02B 5/10

(54) **A REFLECTOR AND A SOLAR TANK-TYPE HEAT COLLECTOR APPLYING IT**

(30) Priority: 17.08.2007 CN 200710143301
(71) Applicant: Kang, Xuehui, Beijing 100022 (CN)
(72) Inventor: VEN, Juha, Beijing 100022 (CN)
(74) Representative: Mohun, Stephen John
(86) International application number: PCT/CN2008/001274
(87) International publication number: WO 2009/024011

(57) **Abstract**

A reflector served as a primary reflector (2) and a solar trough collector applying it are disclosed. The primary reflector (2) comprises at least two reflecting surfaces selected from a first reflecting surface, a second reflecting surface and a third reflecting surface. The second and third reflecting surfaces are positioned at the left side and the right side of the first reflecting surface respectively. The first reflecting surface is constructed to reflect the direct incident light to a first focal line. The second reflecting surface is constructed to reflect the direct incident light to the right side of the first focal line. The third reflecting surface is constructed to reflect the direct incident light to the left side of the first focal line. The trough collector comprises the primary reflector (2), a secondary reflector (101) and a receiving tube (102). Part of the direct light is directly reflected to the receiving tube (102) by the primary reflector (2) and forms the first focal line. Part of the direct incident light is reflected to the secondary reflector (101) by the primary reflector (2) and then is reflected to the receiving tube (102) and forms other focal lines or lines.

## Description

### TECHNOLOGY FIELD

The present invention relates to solar technology, especially for a reflector to collect solar radiation, and a solar collector which comprises such a reflector.

### BACKGROUND

Trough collectors have linear reflectors, mostly linear parabolic shaped and mostly rotated around their centres of gravity as to follow the path of the sun, reflecting the solar radiation onto a linear receiver. This receiver can have several shapes but out of mechanical considerations the receiver is mostly a cylindrical tube with inside a fluid that is being circulated through the receiver and in this way transfers the heat collected by the receivers to the application. In most cases this cylindrical tube or absorber tube is a steel tube coated with a spectral selective surface that absorbs most of the solar radiation but reduces the thermal radiation losses substantially.

One or several glass envelops enclosing the absorber tube can further reduce heat losses of the absorber tube. Commercially produced HCE (Heat Collecting Element) have a sealed vacuum between the absorber tube and the glass envelop that further reduces heat losses. However keeping10 a vacuum for a long period of time bellow 13 Pa at temperatures of up to 400 degree C is difficult and many failures with vacuum loss due to hydrogen permeation have been reported by NREL on the Parabolic Trough Workshop, 9 March 2007 in Golden Colorado.

It is important to increase the operating temperature as this will increase the thermal cycle efficiency of the application. However from a certain temperature on, efficiency losses due to thermal radiation from the absorber tubes will increase more rapidly then the gained thermal cycle efficiency. Reducing these thermal radiation losses can be done by increasing the concentration ratio. Current technology uses a primary reflector build out of several segments or facets trying to focus as much as possible solar radiation onto one absorber tube.

Out of economic and practical reasons the parabolic shape is truncated. This leads to a decrease in maximum concentration because the side of the receiver facing the sun is not being illuminated by the primary reflector. This non uniform illumination and thus heating causes also the absorber tube to bow and in many cases break the glass envelop.

To increase the concentration ratio several designs have been proposed where a secondary reflector is placed near the absorber tube. The absorber tube is reduced in size and radiation from the primary reflector that normally would have missed the absorber tube is reflected by the secondary reflector onto the non illuminated part of the absorber tube. The secondary reflector works like a light trap guiding spilled radiation to the non illuminated part of the absorber tube. Basically a secondary reflector allows the doubling of the concentration and allows higher optical tolerances.

Existing trough collectors with secondary reflectors, as shown in fig.1-5: Fig. 1 shows a drawing of the Duke Solar secondary reflector inside a vacuum envelop, there is no gap between the secondary mirror and the absorber tube. The primary parabolic reflector has a bigger curvature radius and low rim angle. Fig.2, J. M. Gordon 1991 Solar energy vol 47 No 6 pp 457 °C 466, high rim parabolic trough with complex secondary reflector and absorber tube inside a transparent glass tube. Fig 3, J. M. Gordon 1991 Solar energy vol 47 No 6 pp 457 °C 466, parabolic trough with CPC secondary reflector and a flat receiver. The primary parabolic reflector has a bigger curvature radius and a low rim angle. Fig. 4, Harald Ries (1996) Applied optics / Vol 35 No 13 / 1 May 1996, various shapes of secondary reflectors for parabolic trough collectors. Fig. 5, ice cream cone CPC (Compound Parabolic Collector) by Gordon 1993. The ice cream cone CPC was developed for cylindrical receivers with a glass envelop. Because of this the CPC has a gap between the reflector and the absorber tube. Gap losses are compensated by increased aperture area. This type of CPC is widely used in domestic hot water systems incorporating Dewar flask solar vacuum tubes.

In theory the top of secondary reflector should touch the absorber tube as to close the light trap. This is however difficult, absorber tubes expand and bow because of non uniform heating, the secondary reflector is made out of glass that does not permit high thermal shocks that happen when the secondary reflector touches the extremely hot absorber tube. Leaving a space between the secondary reflector and the receiver will open the light trap and lead to gap losses. Another problem is that part of the concentrated light falling unto the secondary reflector will reflect several times on the secondary reflector's mirror surface before reaching the absorber tube. These two points lead to optical losses. In most cases trough collectors with secondary concentrators have a lower efficiency then trough collectors without secondary concentrators. For this reason secondary reflectors have not been used in commercial trough collectors.

### SUMMARY OF THE INVENTION

The present invention provides a solar collector comprising a new reflector, to distribute the solar radiation more evenly around the absorber tube.

This new invention is also aimed to provide a solar collector which allows a higher concentration factor, and increases the intercept factor. The new invention does not suffer from gap losses or multiple reflections on the secondary reflector's surface.

An aspect of the present invention provides a reflector comprising a first reflecting section, a second reflecting section which is at the left side of the first section, and a third reflecting section which is at the right side of the first section. The first section reflects the direct solar radiation onto a first focal line or quasi focal line, the second section reflects the direct solar radiation onto the right side of the first focal line or quasi focal line; the third section reflects the direct solar radiation onto the left side of the first focal line or quasi focal line.

Moreover, the second section may reflect the direct solar radiation onto a second focal line or quasi focal line which is at the right side of the first focal line; The third section reflects the direct solar radiation onto a third focal line or quasi focal line which is at the left side of the first focal line.

The first reflecting section may comprise two parts separated left and right. The left part connects to the second section; the right part connects to the third section.

The left and right parts of the reflector may be symmetric.

Another aspect of the present invention provides a trough collector comprising a primary reflector, a secondary reflector and a receiver tube. The primary reflector includes a first reflecting section, a second reflecting section which is at the left side of the first section, and a third reflecting section which is at the right side of the first section. The first reflecting section reflects the direct solar radiation onto the receiver; the second reflecting section reflects the direct solar radiation onto the right part of secondary receiver and then onto the receiver; the third reflecting section reflects the direct solar radiation onto the left part of secondary receiver and then onto the receiver.

The secondary reflector may be an "ice cream cone" type CPC secondary reflector.

The first section may reflect the direct solar radiation onto a first focal line or quasi focal line, which is the middle line of the receiver.

The second primary reflector section may reflect the direct solar radiation onto a second focal line or quasi focal line which is at the right side of the first focal line; The third section reflects the direct solar radiation onto a third focal line or quasi focal line which is at the left side of the first focal line.

The radiations reflected by primary reflector second and/or third section to the secondary reflector may be middle rays right in the middle of zone formed by edge rays. That means these radiations are all middle rays right in the middle of a certain zone formed by edge rays.

The primary reflector second reflecting section may include one or several of the following: second reflecting section zone 1: the radiations reflected by this zone to the secondary reflector are middle rays of the zone formed by edge rays. One of the edge rays hereby mentioned hits the absorber tube tangentially, and the other hits the absorber tube tangentially after one reflection on the right part of the CPC, second reflecting section zone 2: the radiations reflected by this zone to the secondary reflector are middle rays of the zone formed by edge rays. One of the edge rays hereby mentioned hits the absorber tube tangentially, and the other hits the absorber tube tangentially after one reflection on the edge of the right part of the CPC; second reflecting section zone 3: the radiations reflected by this zone to the secondary reflector are middle rays of the zone formed by edge rays. One of the edge rays hereby mentioned hits the absorber tube tangentially, and the other hits the absorber tube after one reflection on the edge of the right part of the CPC; second reflecting section zone 4: the radiations reflected by this zone to the secondary reflector are middle rays of the zone formed by edge rays. One of the edge rays hereby mentioned hits the absorber tube through the edge of the left part of the CPC, and the other hits the absorber tube after one reflection on the edge of the right part of the CPC.

The primary reflector third reflecting section includes one or several of the following: third reflecting section zone1: the radiations reflected by this zone to the secondary reflector are middle rays of the zone formed by edge rays. One of the edge rays hereby mentioned hits the absorber tube tangentially, and the other hits the absorber tube tangentially after one reflection on the left part of the CPC; third reflecting section zone 2: the radiations reflected by this zone to the secondary reflector are middle rays of the zone formed by edge rays. One of the edge rays hereby mentioned hits the absorber tube tangentially, and the other hits the absorber tube tangentially after one reflection on the edge of the left part of the CPC; third reflecting section zone 3: the radiations reflected by this zone to the secondary reflector are middle rays of the zone formed by edge rays. One of the edge rays hereby mentioned hits the absorber tube tangentially, and the other hits the absorber tube after one reflection on the edge of the left part of the CPC; third reflecting section zone 4: the radiations reflected by this zone to the secondary reflector are middle rays of the zone formed by edge rays. One of the edge rays hereby mentioned hits the absorber tube through the edge of the right part of the CPC, and the other hits the absorber tube after one reflection on the edge of the left part of the CPC.

The primary reflector may be made out of silver coated low iron glass. The receiver is a cylindrical steel tube with spectral selective coating.

The receiver may comprise one or several glass envelopes, and the space inside the glass envelop evacuated to a level bellow 100 Pa.

The secondary reflector may not contact to the receiver tube. Some distance is kept in between.

The first section of the primary reflector may comprise two parts separated left and right; the distance between these two parts is equal to the orthographic projection width of the receiver on the primary reflector.

The secondary reflector may comprise a low thermal emission surface, the backside of the CPC thermally insulated, a steel sheet put around the insulation, the entrance of the secondary reflector cavity that faces the primary reflector closed by a glass or Teflon foil which has an anti reflection layer.

The primary reflector of the trough collector may have a rotating axis, around which the collector track the sun automatically.

The trough collector may further comprise a tilted axis not coplanar to the primary reflector.

The receiver tube or the glass envelopes is supported by guiding wheels.

In contradiction to the known technology, in this invention the receiver tube gets more uniform illumination and thus reduce the thermal stress and bowing of the absorber tube.

The invention allows a higher concentration factor, relaxes optical precision. The CPC needed for this primary reflector has a large gap between the top of the CPC and the absorber tube. The large gap between the absorber tube and the top of the secondary reflector allows easy production and increases reliability.

When the back of the secondary reflector is properly insulated and the front of the secondary reflector cavity that faces the primary reflector is closed off by a glass sheet, the secondary reflector of this invention has a much lower thermal loss without the use of expensive vacuum technology than any reported HCE serving in a trough with a similar aperture. This feature will allow higher operating temperatures and therefore higher overall efficiencies. As there is no use of high vacuum technology the costs can be reduced and the reliability is improved greatly.

### BRIEF DESCRIPTION OF THE DRAWINGS

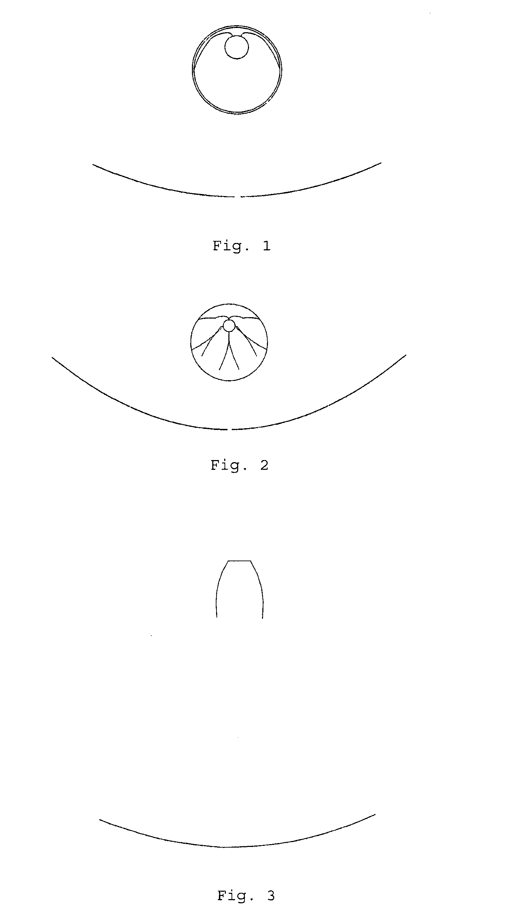

Fig.1: Drawing of the Duke Solar secondary reflector inside a vacuum envelope.
Fig.2: High rim parabolic trough
Fig.3: parabolic trough with CPC secondary reflector and a flat receiver.

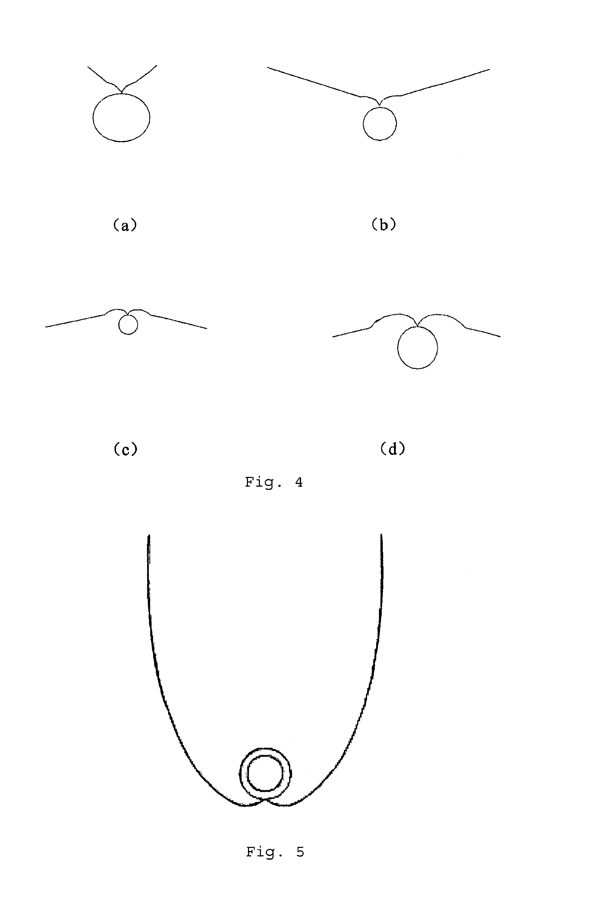

Fig.4a)-4d): various shapes of secondary reflector for parabolic trough collectors in existing technology.
Fig.5: Ice cream cone CPC.

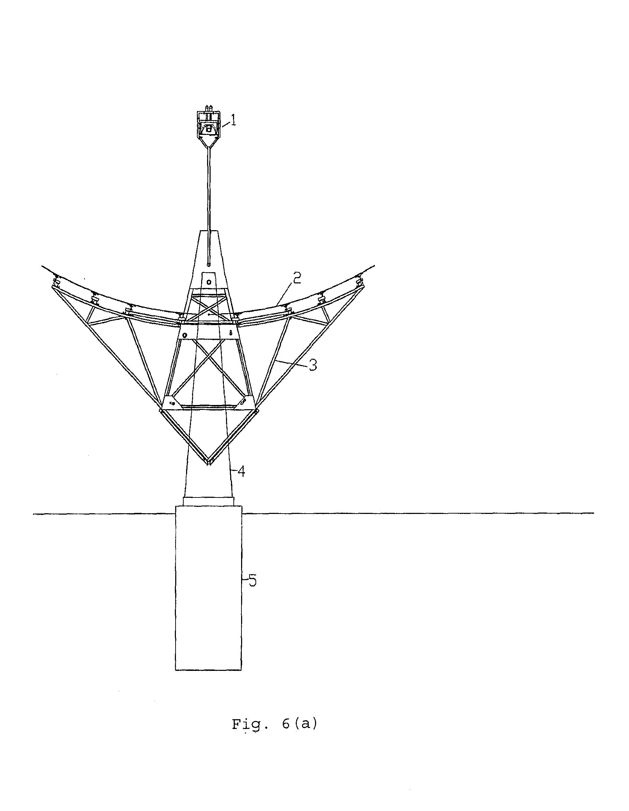

Fig.6 (a)-6(b): left view and back view of the solar collector in this invention.

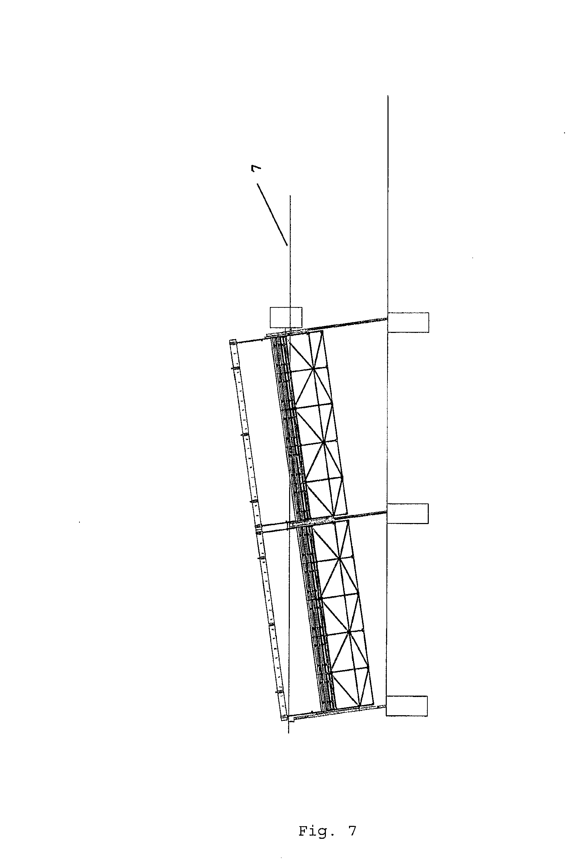

Fig.7: cut view of the tilted collector in this invention.

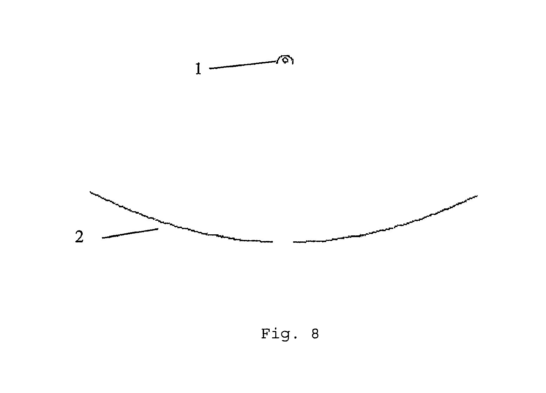

Fig.8: position relation between the primary reflector and the CPC.

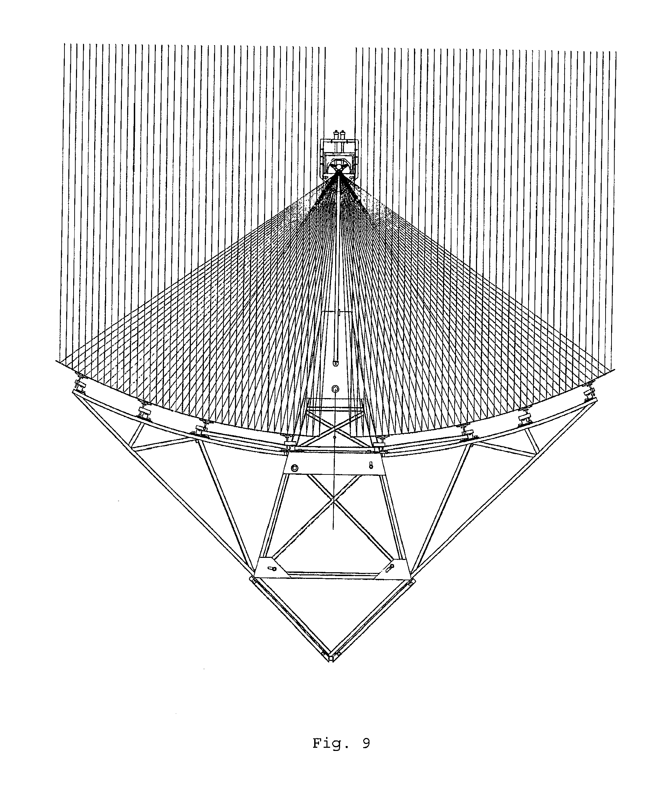

Fig.9: reflection of radiation

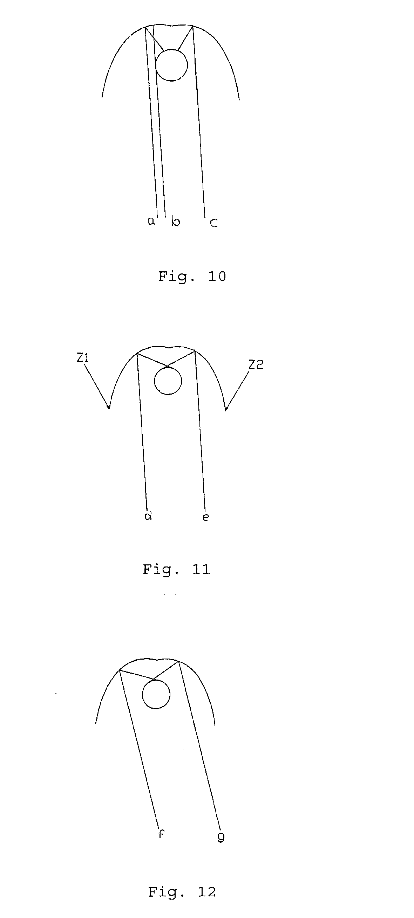

Fig.10: a schematic of a truncated linear Ice cream cone CPC reflector
Fig.11: Edge rays. Edge rays d and e hit the absorber tube tangentially after one reflection on the secondary reflector.
Fig.12: Edge rays. Edge rays f and g hit the absorber tube tangentially after one reflection on the secondary reflector. F and g have a bigger incidence angle.

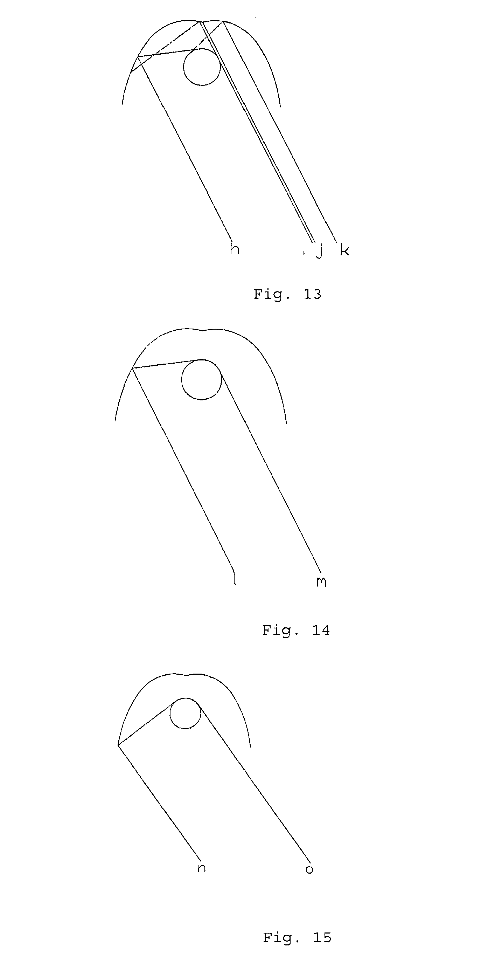

Fig.13: Rays outside of the region formed between the edge rays, rays between i and j having the same direction will be lost.
Fig.14: Edge rays. Edge ray m hits the absorber tube tangentially. Edge ray 1 hits the absorber tube tangentially after one reflection on the secondary reflector.
Fig.15: Edge rays. Edge ray o hits the absorber tube tangentially. Edge ray n hits the absorber tube tangentially after one reflection on the edge of secondary reflector.

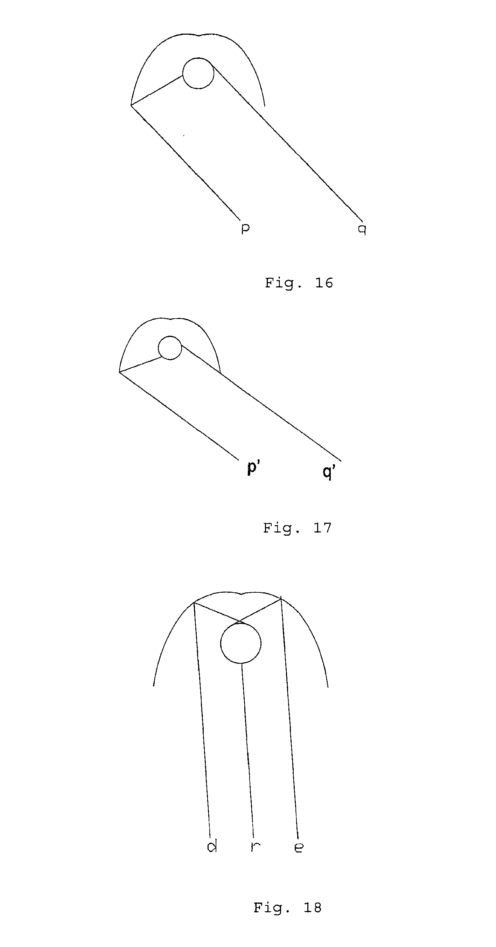

Fig.16: Edge rays. Edge ray q hits the absorber tube tangentially. Edge ray p hits the absorber tube tangentially after one reflection on the edge of secondary reflector.
Fig.17: Edge rays. Edge ray q passing by the edge of the secondary reflector hits the absorber tube. Edge ray p hits the absorber tube after reflection on the edge of secondary reflector.
Fig.18: middle ray r of edge rays d and e.

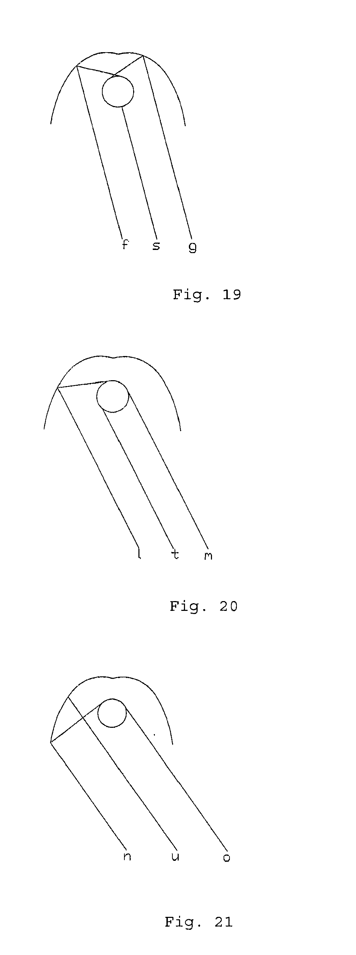

Fig.19: middle ray s of edge rays f and g.
Fig.20: middle ray t of edge rays 1 and m.
Fig.21: middle ray u of edge rays n and o.

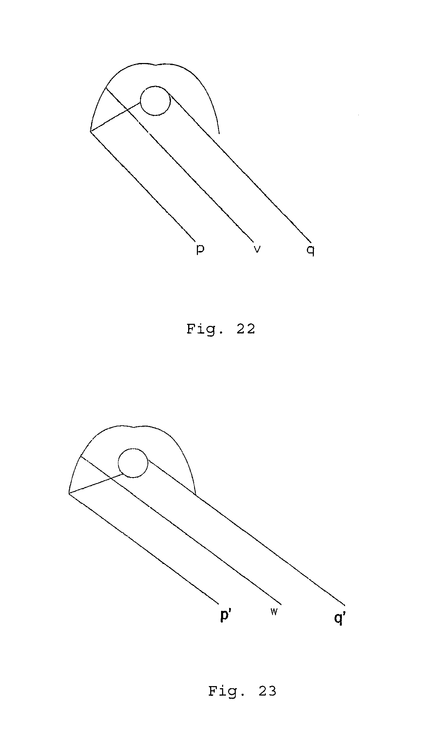

Fig.22: middle ray v of edge rays p and q.
Fig.23: middle ray w of edge rays p' and q'.

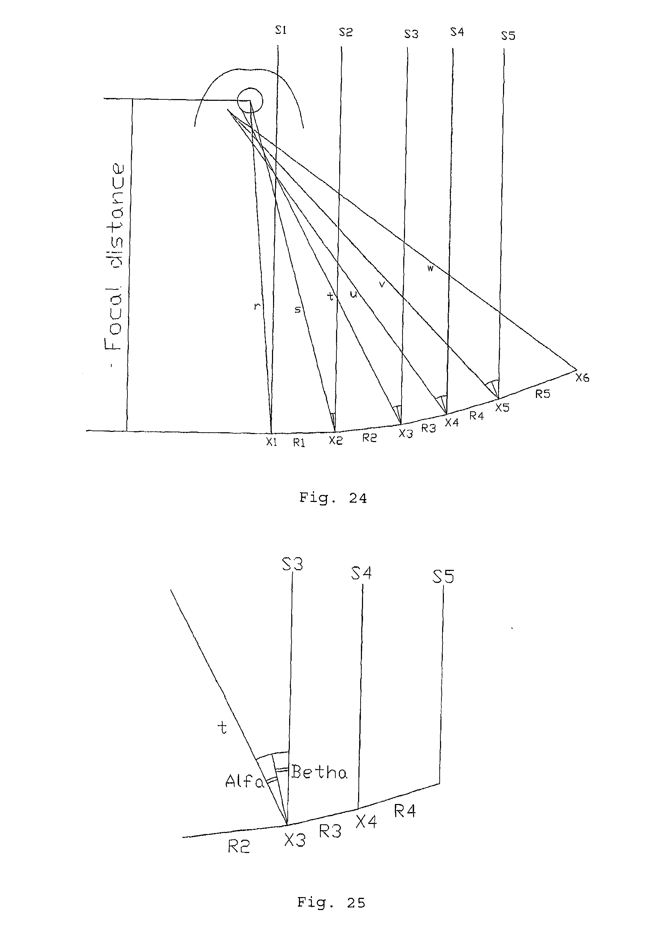

Fig.24: the incoming radiations S1, S2, S3, S4, S5 are reflected by the primary reflector as to the middle rays r, s, t, u, v, w of the zone formed by edge rays.
Fig.25: construction of the primary reflector

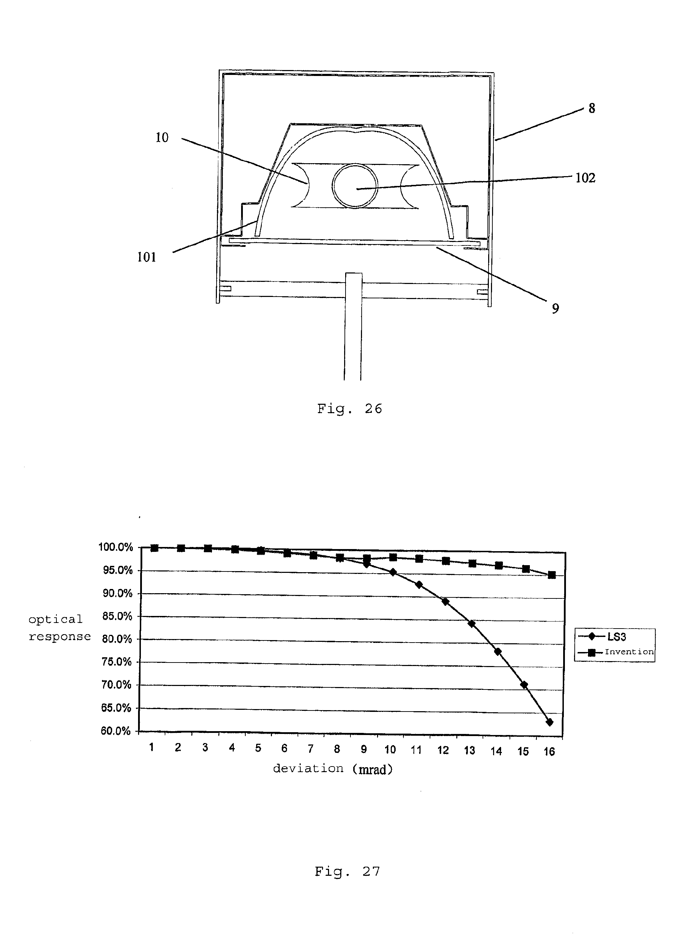

Fig.26: structure of the receiver tube and secondary reflector
Fig.27: optical response of the invention compared to the existing LS3

1- CPC
2- Primary reflector
3- Steel structure supporting the primary mirror
4- Steel support pillars
5- Steel reinforced concrete foundation
6- torque box
7- rotating axis
8- steel plate
9- glass
10- guiding wheels
101- secondary reflector
102- receiver tube

### DETAILED DESCRIPTION

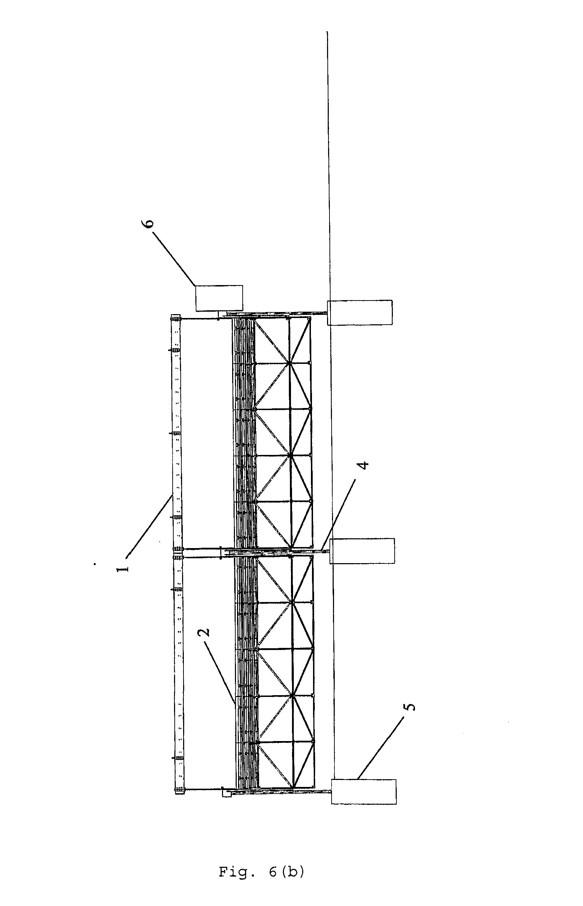

Fig. 6 shows the structure of the collector of the invention. CPC 1 has a secondary reflector and steel receiver tube; the primary reflector is made out of silver coated low iron glass; component 3 is the steel structure supporting the primary mirror; component 4 is steel support pillars; component 5 is steel reinforced concrete foundation; component 6 is the torque box.

Fig. 7 shows the tilted trough with rotating axis which tracks the sun different from the tilt angle. In this case the rotating axis is horizontal and the tilt angle is 8 degree, not coplanar to the primary reflector. Such structure will when orientated in the North South axis provide more energy during winter months.

As the schematic shown in Fig. 8, the new structure has a very large gap between the absorber tube and the top of the secondary CPC reflector. The primary reflector is slightly more concave then a parabola, including the upper left reflector section, the left middle reflector section, the upper right reflector section, and the right middle reflector section.

As shown in Fig. 9, the upper left reflector section of the primary reflector reflects the direct solar radiation into the right part of the secondary reflector, and then to the right part of the receiver tube. The upper right reflector section of the primary reflector reflects the solar radiation into the left part of the secondary reflector, and then to the left part of the receiver tube.

The middle part of the primary reflector is divided in two and the middle section of the primary reflector that is shaded by the secondary reflector is omitted as it has no use. The middle section of the primary reflector reflects the radiation directly to the lower part or the upper part of the receiver tube.

Fig. 10-Fig.25 shows the shapes of the primary reflector.

Fig. 10 shows a schematic of a truncated linear ice-cream cone-shaped CPC reflector, as it is truncated, there is a gap between the secondary reflector and the receiver tube, with a half acceptance angle of 50 degree, a steel absorber tube is coated with a selective solar absorbing layer. Parallel rays a, b and c strike directly on the CPC. Rays a and c reflect on the secondary reflector and are absorbed on the upper part of the absorber tube. A part of this secondary reflector is an involutes that means that any ray tangential to the absorber tube (like ray b), having an incidence angle less then the acceptance angle, is reflected tangentially back by the CPC reflector to that same absorber tube.

Fig. 11 (Fig. 12) shows the edge rays d and e (f and g).

Edge rays are the limits of the largest zone, between which all radiations with the same incidence angle as the edge ray or directly hit the absorber tube or hit the absorber tube after one reflection.

Therefore a ray can only be an Edge ray when it:
1. Hits the absorber tube tangentially; or
2. hits the absorber tube tangentially after one reflection on the CPC; or
3. passes trough point Z1 or Z2 and hit the tube directly; or
4. passes trough point Z1 or Z2 and hit the tube after one reflection on the CPC.

Rays outside of the region formed between the edge rays d to e, (f to g) having the same direction like d (f) will not hit the absorber tube directly or after one reflection. Many of these rays will pass between the tube and the CPC reflector and will be lost.

FIG. 13 shows that from a certain incidence angle onwards rays between i and j reflect on the left side of the CPC and therefore reflect into the wrong direction. Rays between i and j will be lost. These are gap losses and because of this the reflector and absorber touch each other in the classical designs to close the optical trap. For the new design there is a different approach we consider the edge rays are now h and i (l and m).

In the invention there is no gap loss, as the direct solar radiation is reflected to the middle rays of the zone formed by edge rays, therefore any radiation reflected by the primary reflector to the secondary reflector is within a zone formed by edge rays, and will or directly hit the absorber tube or hit the absorber tube after one reflection.

Fig. 15 shows ray n hitting the edge of the CPC. As the incidence angle is increased (Fig. 16 and Fig. 17) edge ray p will not any longer be reflected tangentially to the absorber tube. Edge ray q is also no longer tangential to the absorber.

Fig. 18 - Fig. 23 show the rays right in the middle of zone formed by the two edge rays. These middle rays are rays r, s, t, w, v and u. If the primary reflector reflects radiation according to these rays then we get a system that has no gap losses, every ray will or directly hit the absorber tube or hit the absorber tube after maximum one reflection. This feature gives the high performance of the invention.

Fig. 24 shows how to construct the primary reflector. All middle rays r, s, t, u, v and w are drawn as well.

We find the intersection X1 where the desired focal distance length crosses first middle ray r. At this intersection X1, the incoming solar radiation S1 need to be reflected as to ray r, this condition defines the slope of the reflector segment R1. Intersection of reflector segment R1 with S2 gives us second point X2.

Fig. 25 shows incoming solar ray S3, reflected ray t. As Alfa (reflected angle) equals Betha (incidence angle) the slope of the reflector (R3) is known in point X3. The intersection of reflector segment R3 with S4 will give a next point on the primary reflector X4. Repeating this procedure for a large number of calculated middle rays will give us the complete primary reflector.

As shown in Fig. 24, R1 is the first reflecting section of the primary reflector which reflects the direct radiation onto the middle of the receiver tube; R2 is the aforementioned third reflecting section zone 1, the radiations reflected by this zone to the secondary reflector are middle (centre) rays of the zone formed by edge rays. One of the edge rays hereby mentioned hits the absorber tube tangentially, and the other hits the absorber tube tangentially after reflection on the left part of the CPC. R3 is the aforementioned third reflecting section zone 2: the radiations reflected by this zone to the secondary reflector are middle (centre) rays of the zone formed by edge rays. One of the edge rays hereby mentioned hits the absorber tube tangentially, and the other hits the absorber tube tangentially after reflection on the edge of the left part of the CPC. R4 is the aforementioned third reflecting section zone 3: the radiations reflected by this zone to the secondary reflector are middle (centre) rays of the zone formed by edge rays. One of the edge rays hereby mentioned hits the absorber tube tangentially, and the other hits the absorber tube after reflection on the edge of the left part of the CPC. R5 is the aforementioned third reflecting section zone 4: the radiations reflected by this zone to the secondary reflector are middle (centre) rays of the zone formed by edge rays. One of the edge rays hereby mentioned hits the absorber tube through the edge of the right part of the CPC, and the other hits the absorber tube after reflection on the edge of the left part of the CPC.

R1 of the primary reflector converges the radiation to the centre of the absorber tube. R3, R4, R5 of the primary reflector converges to a quasi focal line at the left side of the absorber tube. Equally out of symmetry the left part of the primary reflector converges at a quasi focal line right of the absorber tube. These quasi focal lines have the advantage that the secondary reflector can easily be adjusted by verifying if these quasi focal lines hit the right part on a calibration screen put in front of the entrance of the secondary reflector cavity.

The primary reflector is slightly more concave than an existing parabola. The new primary mirror can be approximated by a parabolic mirror having at least 3 sections. The middle section doesn't need to be changed. The outer sections need to be tilted slightly inwards to move their focal lines to the calculated quasi focal lines in such a way that the focal line of the upper left reflector section falls onto the calculated quasi focal line at the right of the absorber tube and the focal line of the upper right reflector section falls onto the calculated quasi focal line at the left of the absorber tube. Using parabolic shapes as described above will lead to a loss of performance for the reflector zone between upper and middle reflector section R2, as R2 do not converge to the focal lines or quasi focal lines. But it can be a fast fix for existing installations or allow commercially available components to be used.

Fig. 26 shows the structure of the receiver tube and the secondary reflector. In practice the secondary reflector 101 will be insulated from the back and the entrance of the secondary reflector cavity, that faces the primary reflector, will be closed by a glass 9 or Teflon foil as to reduce heat losses. Such glass can be hardened glass or made out of borosilicate glass as to allow big temperature shocks and temperature differences. An anti reflection and or dust repellent layer on the glass sheet can reduce the reflective losses. Such layers have a low refractive index, porous silica has such properties. A second glass sheet or Teflon foil placed parallel to the first glass or Teflon cover could further reduce the heat losses. The insulation can be kept dry from rain by putting a steel sheet 8 around it. This steel sheet also forms a stable bearing structure to which all parts can be attached. To protect the steel sheet from concentrated radiation, a radiation shield can be placed around the steel sheet.

The absorbing tube 102 or its glass envelop will expand, supporting it by two guiding wheels 10 on bearings will allow for an easy movement and reduce thermal stress in the absorber tube 102. The absorber tube should be selectively coated to have the highest performance. Such a coating will have high solar absorption but a low thermal emission. The reflector can be made out of a hot bended borosilicate glass to allow for big temperature differences. The reflective coating can be made in silver with a protective front surface like silica or alumina.

Fig. 27 shows the optical response of the invention compared to the existing LS3. In this analysis the new structure has a 25% increased concentration ratio and a 60% increased optical response over LS3.

## Claims

1. A reflector, comprising a first reflecting section, a second reflecting section which is at the left side of the first section, and a third reflecting section which is at the right side of the first section, wherein the first section reflects the direct solar radiation onto a first focal line or quasi focal line; the second section reflects the direct solar radiation onto the right side of the first focal line or quasi focal line; and the third section reflects the direct solar radiation onto the left side of the first focal line or quasi focal line.

2. The reflector of claim 1, wherein the second section reflects the direct solar radiation onto a second focal line or quasi focal line which is at the right side of the first focal line; the third section reflects the direct solar radiation onto a third focal line or quasi focal line which is at the left side of the first focal line.

3. The reflector of claim 1 or 2, wherein the first reflecting section comprises two parts separated left and right, and the left part connects to the second section; the right part connects to the third section.

4. The reflector of claim 1 or 2, its left and right parts are symmetric.

5. A trough collector, comprising a primary reflector, a secondary reflector and a receiver tube, wherein the primary reflector includes a first reflecting section, a second reflecting section which is at the left side of the first section, and a third reflecting section which is at the right side of the first section; the first reflecting section reflects the direct solar radiation onto the receiver tube; the second reflecting section reflects the direct solar radiation onto the right part of secondary reflector and then onto the receiver tube; the third reflecting section reflects the direct solar radiation onto the left part of secondary reflector and then onto the receiver tube.

6. The trough collector of claim 5, wherein the secondary reflector is an "ice cream cone" type secondary reflector.

7. The trough collector of claim 5 or 6, wherein its first section reflects the direct solar radiation onto a first focal line or quasi focal line, which is the middle line of the receiver.

8. The trough collector of claim 7, wherein its second primary reflector section reflects the direct solar radiation onto a second focal line or quasi focal line which is at the right side of the first focal line; the third section reflects the direct solar radiation onto a third focal line or quasi focal line which is at the left side of the first focal line.

9. The trough collector of claim 7, wherein the radiations reflected by the primary reflector second and/or third section to the secondary reflector are middle rays right in the middle of zone formed by edge rays.

10. The trough collector of claim 9, wherein the primary reflector second reflecting section includes one or several of the following:
second reflecting section zone 1: the radiations reflected by this zone to the secondary reflector are middle rays of the zone formed by edge rays, one of the edge rays hereby mentioned hits the receiver tube tangentially, and the other hits the receiver tube tangentially after one reflection on the right part of the secondary reflector;
second reflecting section zone 2: the radiations reflected by this zone to the secondary reflector are middle rays of the zone formed by edge rays, one of the edge rays hereby mentioned hits the receiver tube tangentially, and the other hits the receiver tube tangentially after one reflection on the edge of the right part of the CPC;
second reflecting section zone 3: the radiations reflected by this zone to the secondary reflector are middle rays of the zone formed by edge rays, one of the edge rays hereby mentioned hits the receiver tube tangentially, and the other hits the receiver tube after one reflection on the edge of the right part of the secondary reflector;
second reflecting section zone 4: the radiations reflected by this zone to the secondary reflector are middle rays of the zone formed by edge rays, one of the edge rays hereby mentioned hits the receiver tube through the edge of the left part of the secondary reflector, and the other hits the receiver tube after one reflection on the edge of the right part of the secondary reflector;
the primary reflector third reflecting section includes one or several of the following:
third reflecting section zone1: the radiations reflected by this zone to the secondary reflector are middle rays of the zone formed by edge rays, one of the edge rays hereby mentioned hits the receiver tube tangentially, and the other hits the receiver tube tangentially after one reflection on the left part of the secondary reflector;
third reflecting section zone 2: the radiations reflected by this zone to the secondary reflector are middle rays of the zone formed by edge rays, one of the edge rays hereby mentioned hits the receiver tube tangentially, and the other hits the receiver tube tangentially after one reflection on the edge of the left part of the secondary reflector;
third reflecting section zone 3: the radiations reflected by this zone to the secondary reflector are middle rays of the zone formed by edge rays, one of the edge rays hereby mentioned hits the receiver tube tangentially, and the other hits the receiver tube after one reflection on the edge of the left part of the secondary reflector;
third reflecting section zone 4: the radiations reflected by this zone to the secondary reflector are middle rays of the zone formed by edge rays, one of the edge rays hereby mentioned hits the receiver tube through the edge of the right part of the secondary reflector, and the other hits the receiver tube after one reflection on the edge of the left part of the secondary reflector.

11. The trough collector of claim 5, wherein the primary reflector is low iron glass with silver coating, and the receiver tube is a cylindrical steel tube with a solar selective surface.

12. The trough collector of claim 11, wherein the receiver tube comprises one or several cylindrical glass envelop, and the space inside the glass envelop evacuated to a level bellow 100 Pa.

13. The trough collector of claim 5 or 6, wherein its secondary reflector does not touch the receiver tube.

14. The trough collector of claim 5 or 6, wherein its first section of the primary reflector comprises two parts separated left and right; the distance between these two parts is equal to the orthographic projection width of the receiver on the primary reflector.

15. The trough collector of claim 5 or 6, wherein the secondary reflector comprises a low thermal emission surface, the backside of the secondary reflector thermally insulated, a steel sheet put around the insulation, the entrance of the secondary reflector cavity that faces the primary reflector closed by a glass or Teflon foil which has an anti reflection layer.

16. The trough collector of claim 5 or 6, wherein its primary reflector has a rotating axis.

17. The trough collector of claim 16, wherein the trough collector further comprises a tilted axis not coplanar to the primary reflector.

18. The trough collector of claim 5 or 6, wherein its receiver tube is supported by guiding wheels.
